# EUROPEAN PATENT APPLICATION

(11) **EP 2 340 908 A1**
(43) Date of publication of application: **06.07.2011**
(21) Application number: 10197006.9
(22) Date of filing: 24.12.2010
(51) Int. Cl.: B23K 9/095, B23K 9/127

(54) **Adaptive control of arc welding parameters**

(30) Priority: 31.12.2009 US 650596
(71) Applicant: J.Ray McDermott, S.A., Houston, Texas 77079 (US)
(72) Inventor: Breaux, Terry Louis, Houma, LA 70360 (US); Doyle, Thomas Edward, Louisville, OH 44641-1505 (US); Noel, David Clyde, Houma, LA 70364 (US); Yesso, Tal Noah, Houma, LA 70360 (US)
(74) Representative: Meldrum, David James

(57) **Abstract**

A laser sensor to scan the weld joint either before welding begins as a pre-weld scanning operation or in real time during welding to provide adaptive control of the arc welding parameters. A "line" type laser sensor device projects a laser line within a fixed operating window. The line laser produces a reflective position of anything that the laser line "sees" within the operating window. By triangulation, the exact distance an object is from the laser can be measured at any point along the "line" of the laser. Certain parts of the weld bevel are targeted for measurement. The measurements are stored in an electronic storage medium and a data processor. The stored measurements and data processor are used in conjunction with automated welding equipment to adjust the welding parameters as required. Because the exact joint/weld geometry is then known for every portion of the weld, the welding equipment can then respond or "adapt" to variations in the weld joint between the work pieces.

## Description

### FIELD AND BACKGROUND

The invention is generally related to welding operations and more particularly, but not exclusively, to the adaptive control of arc welding parameters.

Narrow groove welding is widely used in the construction of pipelines around the world. Although many automated systems utilize a variety of control systems and methods, the exact geometry of the weld joint is not known at the time of welding. The reason the exact weld geometry is not known is that the joint is comprised of a number of elements that individually and collectively produce errors with respect to the desired joint design. Among the contributing factors are:

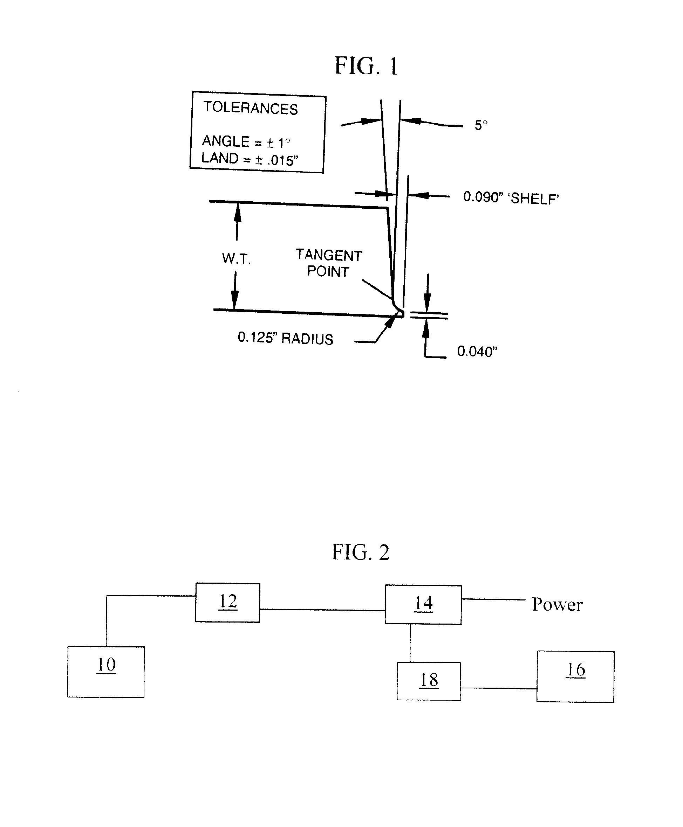

* Pipe End Beveling equipment which introduces tolerances to joint preparation variables such as: 1) bevel angles, 2) bevel land, and 3) bevel "shelf' or "offset" (see Figure 1).

* The dimensional tolerances of the line pipe used for any given pipeline project. The dimensional tolerances vary by project and include diameter, ovality, out-of-roundness, and variations in wall thickness.

* Joint fit-up or "spacing" at the first welding station on a pipeline project. The fitup process (either manual or automatic) also introduces errors when the two pipes are not perfectly matched. This can be in the form of a gap or partial gap or non-concentric mis-match.

* Inconsistent weld shrinkage also contributes to variations in joint geometry.

Because joint geometry is a critical factor in determining optimum welding parameters, when exact joint geometry is unknown, weld quality is limited when using conventional systems. Discrepancies between the desired joint geometry and the actual joint geometry cannot be compensated for because the exact joint geometry is not known. This results in the potential for the creation of welding defects.

Additionally, inconsistency and changes in the actual bevel/weld geometry can also create the need for additional weld passes or "stripper" passes to properly fill the groove to allow the capping pass(es) to be run. For a production environment such as pipeline welding the time taken to run additional weld passes can be very costly.

### SUMMARY

The present invention has been made in the knowledge of shortcomings in the art. Aspect of can utilize a laser sensor to scan a weld joint either before welding begins as a pre-weld scanning operation or in real time during welding to provide adaptive control of the arc welding parameters. A "line" type laser sensor device projects a laser line within a fixed operating window. The line laser produces a reflective position of anything that the laser line "sees" within the operating window. By triangulation, the exact distance an object is from the laser can be measured at any point along the "line" of the laser. Certain parts of the weld bevel are targeted for measurement. The measurements are stored in an electronic storage medium and a data processor. The stored measurements and data processor are used in conjunction with automated welding equipment to adjust the welding parameters as required. Because the exact joint/weld geometry is then known for every portion of the weld, the welding equipment can then respond or "adapt" to variations in the weld joint between the work pieces.

The various features of novelty provided by the invention are pointed out with particularity in the claims annexed to and forming a part of this disclosure. For a better understanding of the invention, its operating advantages and specific benefits attained by its uses, reference is made to the accompanying drawings and descriptive matter in which example embodiments are illustrated.

### BRIEF DESCRIPTION OF THE DRAWINGS

In the accompanying drawings, forming a part of this specification, and in which reference numerals shown in the drawings designate like or corresponding parts throughout the same:

FIG. 1 illustrates the tolerances introduced by pipe beveling equipment.

FIG. 2 is a schematic illustration of the equipment set up.

FIG. 3 is a schematic illustration that illustrates the operation of the laser scanner.

FIG. 4A and B illustrate the typical weld bevel data points.

### DESCRIPTION OF THE PREFERRED EMBODIMENTS

Fig. 2 is a schematic illustration of the equipment set up of the present example. The equipment set up is comprised of a laser scanner 10, a laser scanner controller 12, a power adaptor 14, a computer 16, and, when needed, a switch 18 for directing information to and from the computer 16.

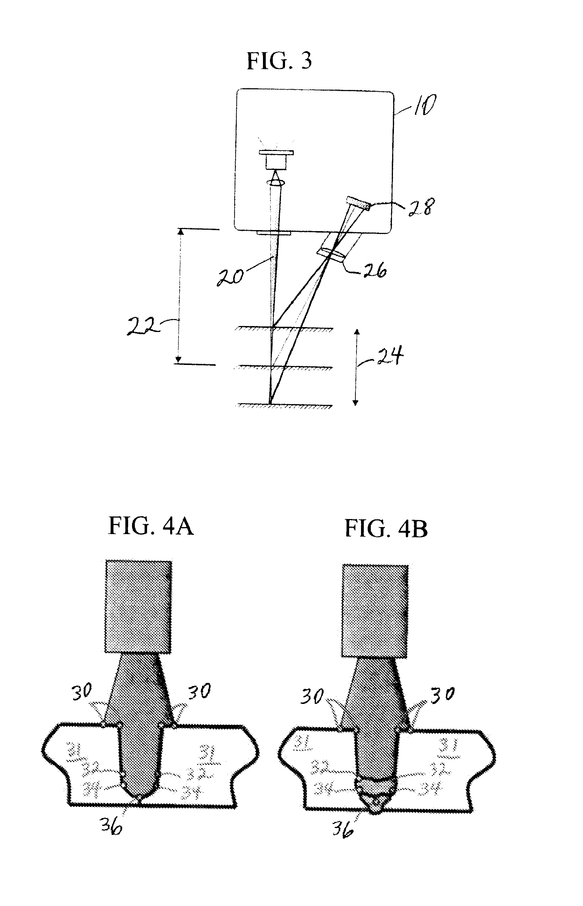

As seen in Fig. 3, the laser scanner 10 projects a laser line 20 within a fixed operating window that includes a reference distance 22 and a measurement range 24. The laser produces a reflective position of anything that the laser line 20 "sees" within the operating window. A lens 26 focuses the laser reflections on a CCD 28. The reflective signals received by the CCD 28 are recorded by the computer 16 for use in the welding operation. By triangulation, the exact distance an object is from the laser can be determined at any point along the line of the laser. The recorded measurement of the laser reflections provides three hundred sixty degrees of actual joint geometry of the weld bevel.

As seen in Fig. 4, certain key parts of the weld bevel are targeted for measurement. These include the top edge 30 of each pipe 31, the tangent point 32 of the bevel angle, the top point 34 of each side of the bevel land, the volume to be welded, and any gap 36 between the two joints of pipe 31 (first pass only).

The information obtained from the measurements can be used with additional calculations to determine measurements such as high/low mismatch of the joint, pipe wall thickness, and bevel parameters.

In operation, the pipes 31 to be welded together are positioned adjacent and in contact with each other as in the normal manner when setting up work pieces for welding. The described approach may be used for a pre-weld scanning operation or in real time during the welding operation.

When used in a pre-weld scanning operation, the laser scanner 10 is positioned next to the joint between the pipes 31 and the entire circumference of the pipes 31 at the intended weld area is scanned and measured by triangulation of the laser reflections as referenced above. The measurements are recorded in an electronic data storage medium and data processor or computer 16. The computer 16 contains software that is designed to work with the stored measurements for making adjustments to the welding operation. A person skilled in the art will understand how to write the software required for working with the stored measurements. The described arrangement is capable of being used with conventional automated welding equipment. Automated welding equipment not shown is connected to the computer 16 and used to weld the two pipe sections 31 together at the joint. The measurements recorded and calculated by the computer 16 are used in conjunction with the above-referenced software to control movement of the welding equipment, feed rate of the welding wire, and the depth and width of the weld to insure the best weld. Fig. 4B illustrates the results of the first root pass with the welding equipment at the lower portion of the weld joint and then a typical fill pass measurement to finish the weld joint.

When used in real time during the welding operation, the equipment is set up immediately ahead of the welding torch of the automated welding equipment. The laser, sensor, computer, etc. are used in the same manner to scan the weld joint and determine measurements, with the only difference being that the measurements are taken during the welding operation with adjustments to the welding parameters being made in the same manner as described above.

While the description generally references the use of the described techniques in relation to welding pipe joints, it should be understood that the techniques are applicable to weld joints for other types of work pieces.

Some implementations effects of the described techniques are as follows.

Because the exact joint/weld geometry is known for every portion of the circumferential weld, the computer can cause the welding equipment to respond or adapt to variations in the joint bevel. The response or adaptive control of the welding equipment can include a change in any of the controlled welding parameters as required to insure the best weld in accordance with the recorded and calculated measurements of the pipe joint. These parameters include, but are not limited to, voltage, current, pulsing parameters when PGMAW (Pulsed Gas Metal Arc Welding) is used, wire feed rate, travel speed, oscillation parameters (width, speed, dwell angle, etc.), and position of the welding torch relative to the weld joint. The measurements and adaptive control can be used with any automated welding equipment.

The techniques of the present examples allow for compensation of any bevel and joint fit-up that is less than ideal. The stored measurements and calculations provide the ability to dynamically change any of the welding parameters listed above during welding. Combined with the detailed geometric information of the work pieces, adjustments may be made to one or more parameters to compensate for the bevel or fit-up variation.

An example of a required compensation would be a poor fit-up that results in one portion of the weld joint being wider than it should be. When welding the wider section of the joint, adjustment can be made to the wire feed rate to increase the deposited weld metal to insure proper fill for each weld pass. At the same time, the arrangement can widen the oscillation width parameter to insure the arc obtains proper penetration into the side walls of the bevel (into the parent material).

The adaptive control can be developed for any variation from the ideal weld joint. The software may include specific parameters to be changed as well as the amount of change. The software may be designed to make adjustments proportionally as a function of the degree of error in the weld joint as measured by the laser sensors.

The described approaches can reduce the risk of potential weld defects caused by variations in weld/bevel geometry for any location of a circumferential weld.

The described approached can improve consistency of root pass penetration and root profile.

The described approaches can allow adjustment of weld volume deposited by each weld pass to insure proper filling of the weld groove within the planned number of weld passes.

The described approaches can allow validation of joint fit-up by comparing the actual (measured) bevel geometry to pre-set allowable bevel geometry.
Thus, viewed from one aspect, there has been described a laser sensor to scan a weld joint either before welding begins as a pre-weld scanning operation or in real time during welding to provide adaptive control of the arc welding parameters. A "line" type laser sensor device projects a laser line within a fixed operating window. The line laser produces a reflective position of anything that the laser line "sees" within the operating window. By triangulation, the exact distance an object is from the laser can be measured at any point along the "line" of the laser. Certain parts of the weld bevel are targeted for measurement. The measurements are stored in an electronic storage medium and a data processor. The stored measurements and data processor are used in conjunction with automated welding equipment to adjust the welding parameters as required. Because the exact joint/weld geometry is then known for every portion of the weld, the welding equipment can then respond or "adapt" to variations in the weld joint between the work pieces.

While specific examples and/or embodiments and/or details have been shown and described above to illustrate the application of the principles of the present teachings, it is understood that the invention may be embodied as more fully described in the claims, or as otherwise known by those skilled in the art (including any and all equivalents), without departing from such principles.

## Claims

1. A method for controlling arc welding parameters at a weld joint, the method comprising:
scanning the weld joint of at least two work pieces prior to welding and obtaining measurements of the weld joint;
storing the weld joint measurements in a computer;
connecting an automated welding device to the computer containing the weld joint measurements; and
using the stored measurements and the computer to control the automated welding device during welding operations and make adjustments to welding parameters of the weld joint as required during the welding operation.

2. The method of claim 1, wherein the weld joint is scanned using a laser.

3. The method of claim 1 or 2, wherein the measurements obtained include the height of the corresponding edge of each work piece, the tangent point of the bevel angle of each work piece, the top point of each side of the bevel land, and any gap between the work pieces.

4. The method of claim 1, 2 or 3, wherein the weld parameters controlled include voltage.

5. The method of any preceding claim, wherein the weld parameters controlled include current.

6. The method of any preceding claim, wherein the weld parameters controlled include pulsing parameters.

7. The method of any preceding claim, wherein the weld parameters controlled include wire feed rate.

8. The method of any preceding claim, wherein the weld parameters controlled include travel speed.

9. The method of any preceding claim, wherein the weld parameters controlled include oscillation parameters.

10. The method of any preceding claim, wherein the weld parameters controlled include the position of the welding torch relative to the weld joint.

11. An apparatus for taking weld joint measurements of at least two work pieces prior to welding and controlling automated welding equipment to make adjustments to weld parameters during the welding operation on the work pieces, the apparatus comprising:
means to scan and measure the weld joint; and
means to receive and store the weld joint measurements;
wherein said means for receiving and storing the weld joint measurements is configured for attachment to and control of automated welding equipment.

12. The apparatus of claim 11, wherein said means to scan and measure the weld joint comprises a laser and a CCD that receives reflections of the laser and transmits the CCD signals to the means for receiving and storing the weld joint measurements.

13. The apparatus of claim 11 or 12, wherein said means for receiving and storing the weld joint measurements comprises a computer.
